# EUROPEAN PATENT APPLICATION

(11) **EP 3 358 526 A1**
(43) Date of publication of application: **08.08.2018**
(21) Application number: 18154884.3
(22) Date of filing: 02.02.2018
(51) Int. Cl.: G06T 7/73, G06T 7/00, G06T 7/33

(54) **SYSTEM AND METHOD FOR SCORING COLOR CANDIDATE POSES AGAINST A COLOR IMAGE IN A VISION SYSTEM**

(30) Priority: 03.02.2017 US 201715424767
(71) Applicant: Cognex Corporation, Natick, MA 01760-2059 (US)
(72) Inventor: DAVIS, Jason, Franklin MA 02038 (US); MICHAEL, David J., Wayland MA 01778 (US)
(74) Representative: Pinney, Matthew David

(57) **Abstract**

This invention provides a system and method for scoring a candidate pose in a geometric-pattern matching tool of a vision system by using trained color, grayscale and/or range (height) information ("color/grayscale/range") in association with edge-aligned candidate poses. A trained pattern includes associated color/grayscale/range information in a set of test points. At runtime, a color, grayscale and/or range image is acquired and/or provided. A runtime pose is established with a coordinate space for the color/grayscale/range image with respect to the trained pattern, where the runtime pose is generated by an alignment tool. The color/grayscale/range test points are mapped onto the coordinate space for the image. The match is then determined at the respective mapped test points. Based on the test point match, a score is determined. The score is used in conjunction with the alignment result in runtime to accept or reject candidate poses from (e.g.) acquired images of runtime objects.

## Description

### FIELD OF THE INVENTION

This invention relates to machine vision systems and associated methods for alignment and inspection of objects in an imaged scene.

### BACKGROUND OF THE INVENTION

Machine vision systems, also termed "vision systems" herein, are used to perform a variety of tasks in a manufacturing environment. In general, a vision system consists of one or more cameras with an image sensor (or "imager") that acquires grayscale or color images of a scene that contains an object under manufacture. Images of the object can be analyzed to provide data/information to users and associated manufacturing processes. The data produced by the image is typically analyzed and processed by the vision system in one or more vision system processors that can be purpose-built, or part of one or more software application(s) instantiated within a general purpose computer (e.g. a PC, laptop, tablet or smartphone).

Common vision system tasks include alignment and inspection. In an alignment task, vision system tools, such as the well known PatMax® system commercially available from Cognex Corporation of Natick, MA, compares features in an image of a scene to a trained (using an actual or synthetic model) pattern, and determines the presence/absence and pose of the pattern in the imaged scene. This information can be used in subsequent inspection (or other) operations to search for defects and/or perform other operations, such as part rejection.

It is challenging for a vision system to match certain imaged features to trained patterns. This can result from a lack of high-contrast edges (which most pattern matching tools use to base matching decisions). The existence of clutter-contrast features that are separate from the expected edges-can be employed to assist matching decisions, as described in commonly assigned U.S. Patent Application Serial No. 14/580,153, entitled SYSTEM AND METHOD FOR DETERMINING CLUTTER IN AN ACQUIRED IMAGE, filed December 24, 2014, by Jason Davis, *et al*, the teachings of which are incorporated by reference as useful background information. This system and method operates to discern grayscale-based clutter in a runtime image, and more particularly, it allows determination of a clutter score that enables matching of candidate poses with respect to a trained pattern. The trained pattern is provided with a set of clutter test points that represent a level of *emptiness* in the trained pattern. A runtime pose with a coordinate space for the image with respect to the trained pattern is established. The clutter test points are then mapped onto the coordinate space for the image, and the level of *emptiness* is determined at the mapped clutter test points. Based upon the level of emptiness, a level of clutter in (at least a portion of) the acquired image is determined.

In many applications of machine vision it is desirable to match patterns that contain distinct image information other than edges-such as color, grayscale levels and/or height (range information). Similar to how clutter estimates are less stable in regions of high gradient, color, grayscale and/or height are typically least stable at the object edges-regions of high gradient---which are the features typically employed by traditional geometric pattern-matching processes and/or algorithms.

### SUMMARY OF THE INVENTION

This invention overcomes disadvantages of the prior art by providing a system and method for scoring a candidate pose in a geometric-pattern matching tool of a vision system by using, in addition to (e.g.) edge-based matching techniques, and in addition to clutter scoring, trained color, grayscale and/or range (height) information (termed "color/grayscale/range") in association with candidate poses. The system and method thereby provides a trained pattern that includes associated color, grayscale and/range information, which is characterized in a set of color/grayscale/range test points. A set of color/grayscale/range test points is provided in the trained pattern, which are selected to reside generally at areas of lowest gradient in the training image. At runtime, a color, grayscale and/or range image of one or more objects in a scene is acquired and/or provided to the system and method. A runtime pose is established with a coordinate space for the color/grayscale/range image with respect to the trained pattern, where the runtime pose is generated by a geometric pattern matching (alignment) tool and process. The color/grayscale/range test points are mapped onto the coordinate space for the image. The color/grayscale/range match is then determined at the respective mapped color/grayscale/range test points. Based on the color/grayscale/range point match, a color/grayscale/range score is determined in at least a portion of the image (relative to the object of interest). In general, the score can provide the user with information as to the quality of the match between the trained pattern and candidate pose by providing an additional scoring metric based upon presence or absence of matching color/grayscale/range within areas of low gradient. Optionally, the score can be used in conjunction with a geometric pattern-matching alignment result at runtime to accept or reject candidate poses from (e.g.) acquired images of runtime objects. Optionally, the same test points or test points with similarly low gradients can be used to measure clutter as well.

In an illustrative embodiment, a system and method for scoring a candidate pose of a trained color pattern against a color image with a vision system having a camera assembly and a vision system processor is provided. A vision system processor includes a trained color pattern with a set of color test points that represent color match information in the trained pattern. The color test points reside at least in regions of low gradient relative to an intensity image representation of the color image. A runtime color image of a scene is provided to the vision system processor, which establishes a runtime pose with a coordinate space for the runtime color image with respect to the trained pattern, where the runtime pose is generated by a geometric alignment process. The color test points on the coordinate space for the image are mapped, and the color match is determined, respectively, at the mapped color test points. Based on the color match, a color match score in at least a portion of the runtime color image is determined. Illustratively, the determining of the color match comprises determining a value for the color in a predetermined color space of the trained color pattern to the runtime color image at the mapped color test points. The establishing of the pose can comprise at least one of (a) employing alignment tools in the vision system to automatically align the runtime image to the trained color pattern and (b) obtaining information indicating the pose from a user input. The system and method can apply a mask to the runtime color image, wherein the mask indicates which areas of the runtime color image are evaluated for color match. Illustratively, an intensity image can be generated from at least one of the trained color pattern and the runtime color image for use by the geometric alignment process. The color test points can reside in regions of low gradient based upon a gradient magnitude threshold, in which the gradient magnitude threshold can be established by at least one of (a) a user-input parameter and (b) a system-generated parameter.

In another illustrative embodiment, a system and method for scoring a candidate pose of a trained grayscale pattern against a grayscale image with a vision system having a camera assembly and a vision system processor is provided. A vision system processor includes a trained grayscale pattern with a set of grayscale test points that represent grayscale match information in the trained pattern. The grayscale test points reside at least in regions of low gradient relative to an intensity image representation of the grayscale image. A runtime grayscale image of a scene is provided to the vision system processor, which establishes a runtime pose with a coordinate space for the runtime grayscale image with respect to the trained pattern, where the runtime pose is generated by a geometric alignment process. The grayscale test points on the coordinate space for the image are mapped, and the grayscale match is determined, respectively, at the mapped grayscale test points. Based on the grayscale match, a grayscale match score in at least a portion of the runtime grayscale image is determined. Illustratively, the determining of the grayscale match comprises determining a value for the grayscale in the trained grayscale pattern to the runtime grayscale image at the mapped grayscale test points. The establishing of the pose can comprise at least one of (a) employing alignment tools in the vision system to automatically align the runtime image to the trained grayscale pattern and (b) obtaining information indicating the pose from a user input. The system and method can apply a mask to the runtime grayscale image, wherein the mask indicates which areas of the runtime grayscale image are evaluated for grayscale match. Illustratively, an intensity image can be generated from at least one of the trained grayscale pattern and the runtime grayscale image for use by the geometric alignment process. The grayscale test points can reside in regions of low gradient based upon a gradient magnitude threshold, in which the gradient magnitude threshold can be established by at least one of (a) a user-input parameter and (b) a system-generated parameter.

In another illustrative embodiment, a system and method for scoring a candidate pose of a trained range image pattern against a range image with a vision system having a camera assembly and a vision system processor is provided. A vision system processor includes a trained range image pattern with a set of range image test points that represent range match information in the trained pattern. The range test points reside at least in regions of low gradient relative to an intensity image representation of the range image. A runtime range image of a scene is provided to the vision system processor, which establishes a runtime pose with a coordinate space for the runtime range image with respect to the trained pattern, where the runtime pose is generated by a geometric alignment process. The range test points on the coordinate space for the image are mapped, and the range match is determined, respectively, at the mapped range test points. Based on the range match, a range match score in at least a portion of the runtime range image is determined. Illustratively, the determining of the range match comprises determining a value for the range in the trained range pattern to the runtime range image at the mapped range test points. The establishing of the pose can comprise at least one of (a) employing alignment tools in the vision system to automatically align the runtime image to the trained range image pattern and (b) obtaining information indicating the pose from a user input. The system and method can apply a mask to the runtime range image, wherein the mask indicates which areas of the runtime range image are evaluated for range match. Illustratively, an intensity image can be generated from at least one of the trained range pattern and the runtime range image for use by the geometric alignment process. The range test points can reside in regions of low gradient based upon a gradient magnitude threshold, in which the gradient magnitude threshold can be established by at least one of (a) a user-input parameter and (b) a system-generated parameter.

In another illustrative embodiment, a system and method for training a pattern with a vision system is provided, with a camera assembly and a vision system processor operatively connected to the camera assembly. A training module receives training image data, identifies regions of low gradient magnitude and applies test points in the regions with respect to the image data based upon at least one of color, grayscale intensity and range up to a maximum test point count. Illustratively, the vision system processor includes a runtime alignment module arranged to (a) acquire runtime image data of a scene and (b) establish a runtime pose with a coordinate space for the runtime image data with respect to the trained pattern, where the runtime pose is generated by a geometric alignment process and (c) the color test points on the coordinate space for the runtime image data. The vision system processor can include a matching process that is arranged to (a) determine at least one of a color, grayscale intensity and range match between the trained pattern and the runtime image data and (b) determine a match score in at least a portion of the runtime image data. An intensity image can be generated, based upon at least one of the trained range image pattern and the runtime image data for use with the geometric alignment process. Illustratively, the pose is established based upon at least one of (a) alignment tools in the vision system that automatically align the runtime image to the trained pattern and (b) information indicating the pose from a user input. In embodiments, a mask can be applied to the runtime image, in which the mask indicates which areas of the runtime image are evaluated for matching.

### BRIEF DESCRIPTION OF THE DRAWINGS

The invention description below refers to the accompanying drawings, of which:
Fig. 1 is a diagram of a vision system arranged to acquire a color, grayscale and/or range image of a surface of an object containing exemplary features in which regions with distinctive color, grayscale level and/or height are present;
Fig. 2 is an overall procedure for deriving intensity image information (magnitude) for use with a geometric pattern matching tool of Fig. 1 in both training time and runtime operation;
Fig. 3 is a flow diagram of a training procedure for establishing color/grayscale/range test points based upon a model image for use in determining a match to corresponding color/grayscale/range information at test points in an aligned runtime image candidate pose;
Fig. 3A is a diagram of an exemplary feature set at training time or runtime in which color/grayscale/range test points populate an exemplary region of interest containing the feature set;
Fig. 3B is a diagram of the exemplary feature set and test point grid of Fig. 3A showing the omission of test points in areas of relatively high gradient (e.g. edges) according to an embodiment;
Fig. 4 is a flow diagram of a procedure for establishing values for Color/Grayscale/RangePixelCount and TrainingPixelCount for use with the training procedure of Fig. 3;
Fig. 5 is a flow diagram of a runtime color/grayscale/range information match determination procedure in which color/grayscale/range test points are mapped to a runtime image candidate pose and the level of match between training and runtime test points is determined therefrom; and
Fig. 6 is a flow diagram of a color/grayscale/range match score determination procedure for use in the runtime determination procedure of Fig. 6.

### DETAILED DESCRIPTION

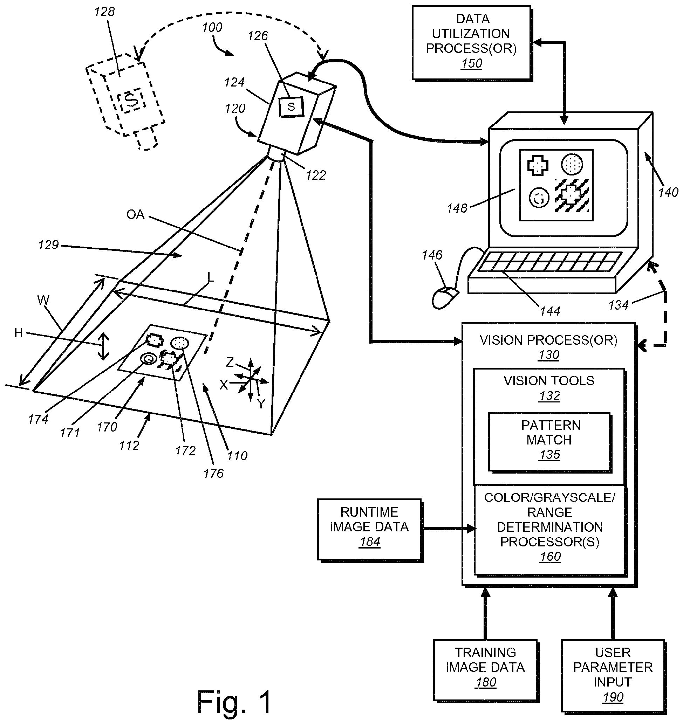

Fig. 1 shows a machine vision system arrangement (also termed simply, "vision system") 100 for use in inspecting and/or analyzing features on an object surface in a scene 110 that is imaged within the field of view (FOV) 112 of a vision system camera assembly 120. The camera assembly 120 can be any acceptable arrangement of components and typically includes a lens assembly 122 and a camera body 124 that houses an image sensor (or "imager") 126, based upon any acceptable imaging technology, such as CCD or CMOS. The imager 126 can be arranged to acquire images in two dimensions (e.g. length L and width W) in an array of image pixels that can be adapted to sense the scene in either grayscale or color. In various embodiments, the camera can also be arranged to acquire three-dimensional (3D) information about the imaged scene within a working space (for example the pyramidal volume 129) that also defines an object height H. A variety of 3D imaging technologies can be employed, for example including, but not limited to, a laser displacement sensor (profiler), a stereoscopic camera, a sonar, laser or LIDAR range-finding camera, time-of-flight sensor, and a variety of other passive or active range-sensing technologies. Such cameras produce a range image wherein an array of image pixels (typically characterized as positions along orthogonal x and y axes) is produced that contains the third (height) dimension for each pixel (typically characterized along a z axis perpendicular to the x-y plane).

The camera body can contain various image processing components that constitute a vision processor 130 that operates an associated vision process. The vision processor operates upon the acquired images of the scene and can employ vision system tools and processes 132 to extract information from the acquired image. This information can relate to features of interest and other items appearing within the image-for example vision system tools such as the well known PatMax® and/or PatMax RedLine® available from Cognex Corporation of Natick, MA, can be used to analyze features in the image and provide information on relative pose, alignment and other details-e.g. presence/absence, etc. These tools can be used generally to perform geometric pattern matching 134.

While some or all of the vision system processes can be instantiated within the body 124 of the camera assembly 120, it is expressly contemplated that some or all of the processes (as indicated by dashed arrow 134) can be carried out by an interconnected (wired or wireless) computing device/processor, such as a purpose-built processor or a general purpose computer (e.g. server, PC, laptop, smartphone, tablet, etc.) 140, with appropriate user interface 142 and display 144, 146 and display 148. The interconnected computing device/processor 140 can employ the processed image data to carry out further utilization tasks (i.e. using a "utilization element(s)" or "utilizer" process(es)) 150. For example, where the vision system carries out inspection tasks, the information can be used to provide quality control information to a database or to reject defective parts on a line. The information can also be used (e.g.) in logistics applications, by reading labels and/or ID codes on objects. A variety of other utilization tasks can also be undertaken with image data and associated information. Note that while a single camera 120 is shown, the overall "camera assembly" can include a plurality of cameras (e.g. additional camera 128, shown in phantom) each imaging the scene, and defining an overall FOV/working space. Such cameras can be tied together via the vision system processor 130, or another processing modality. Various calibration techniques known to those of skill can be used to create a common coordinate system between the cameras when imaging the scene and objects therein.

In the illustrative embodiment, the vision process and processor includes a Determination process(or) (also termed a "module") 160 that finds and analyzes a value/level of color, grayscale and/or range information (these three alternative metrics herein being termed "color/grayscale/range") in regions of interest of the imaged scene/object at training time and runtime. Whether color, grayscale or range is processed depends upon the inherent capabilities of the camera, and what form of distinct image information allows objects to be appropriately identified at locations remote from their edges. For example, where a variety of discretely colored objects are to be analyzed, a color determination process can be used. If grayscale shade differs between objects, then a grayscale determination process can be used, and likewise, if the objects differ in height, then a range determination process is appropriate. In general, the determination process(or) or module operates to determine a level of color/grayscale/range in an acquired image according to embodiments herein. Color is typically characterized by three variables associated with each color pixel in the image-for example red, green and blue (RGB), cyan, magenta and yellow (CMY), HSI, HSV, etc. These are represented in a "color space", where each value has a number within a predetermined range. Similarly, grayscale is represented by a range of gray levels that can range over (e.g.) 8-16 bits. Height or range is represented by a "z" axis value that is defined as a distance within the calibrated working space of the camera-for example a distance along the optical axis OA between the imaged surface and the optical plane of the sensor S (in millimeters, for example). In each case, a location in the image (generally defined by x and y coordinates, or another 2D array) includes this third measure of information that provides associated color, grayscale or range for that image location.

In the exemplary arrangement 100, the camera(s) 120 (and 128) is/are imaging the scene 110 within the FOV 112 and/or working space 129 of the camera(s) 120 (and 128). An exemplary object 170 resides in the scene 110. This object includes exemplary features 171, 172, 173 and 174, surrounded by a background 176. By way of non-limiting example, the features 171, 172, 173 and 174 can differ in terms of color, grayscale level, and/or height with respect to each other and/or the background 176. By way of further non-limiting example, the "cross" features 172 and 174 have similar geometric edge arrangements, but differ from each other in terms of color, grayscale level or height. These differences can be used to supplement or enhance the results of the edge-based pattern matching tool(s) 134 to obtain a more reliable and accurate overall alignment result by adding this to the overall scoring metric that decides which runtime candidate pose provides the best alignment solution with respect to the trained model pattern.

In determining a value for color, grayscale level or range in the image, the system first provides training image data 180, which typically includes features of interest, and can be based upon acquired images of an actual training object surface and/or synthetic image data. That is, the training image and associated training pattern can be specified by a description provided in (e.g.) a CAD model, synthetic square, etc. The term "training image" and "training pattern" should thus be taken broadly to include data sets that are specified generally free of reliance of pixel values. During runtime, the system receives the image data 184 from an acquired image. This can be based on real time acquisition or a stored image of the scene 110 and object 170. The system also receives various input parameters 190 from the user for both training and runtime operation as described further below.

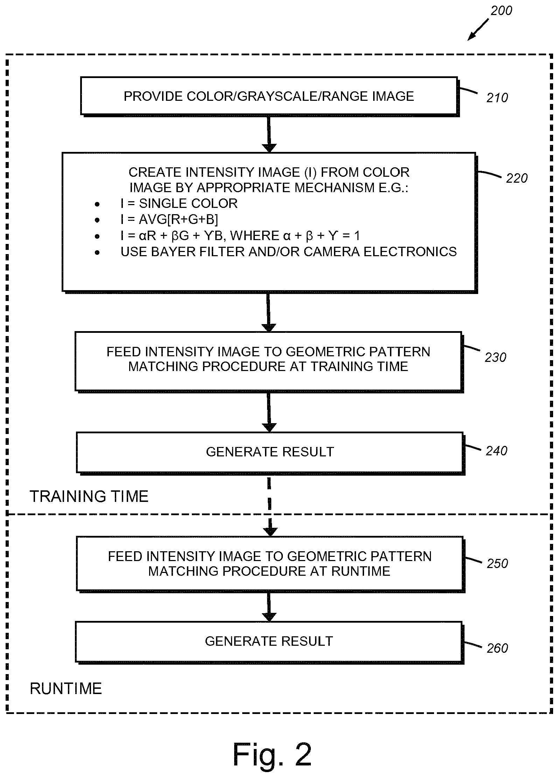

Reference is now made to Fig. 2, which shows an initial procedure 200 in analyzing both a training image and runtime image. In this initial procedure, an intensity image is created from a color image if required. Such an image is typically defined by an array/matrix of intensity values each associated with respective pixel locations in the array, with the intensity value defining a number within a certain range (e.g. 16 bits). In step 210, at training time, a color/grayscale/range image is acquired of a model, or otherwise provided (using a CAD representation, etc.) by the user/operator to the system. If the image is acquired or provided as grayscale, then it is defined by intensity values in terms of grayscale level. Range images can optionally also include pixels having grayscale level corresponding to an intensity image or alternatively can have an attached intensity image. As described below, geometric pattern matching can occur based upon either the range image, intensity image, or both in appropriate combination(s). If the image is color, then it is converted to an intensity image in step 220. In this manner the geometric pattern matching tool can analyze it at training time and runtime. The intensity image can be generated from the color image by a variety of appropriate mechanisms as shown. For example, intensity I can be determined as the value assigned to each pixel for a single color (e.g. the value of the green G pixels. Alternatively, I can be defined as an average of the individual values that define the color space (e.g. I = Avg(R + G + B)) for each pixel. Alternatively, a weighted/normalized average can be employed (e.g. I = αR + βG + γB, where α + β + γ = 1). Additionally, the intensity image can be derived according to skill in the art using the camera electronics and/or a Bayer filtering technique.

In step 230 of the procedure 230, the intensity image/grayscale/range image is fed at training time into the geometric pattern matching tool (134 in Fig. 1), which operates the procedure using the intensity image/grayscale/range image and generates a result which is a training model (step 240).

At runtime, as represented in step 250, an intensity/greyscale/range image of the runtime scene is again created as described above, and fed into the geometric pattern matching tool and procedure (e.g. Patmax®, Patmax RedLine®, etc. This is used in generating results which are poses and scores (step 260).

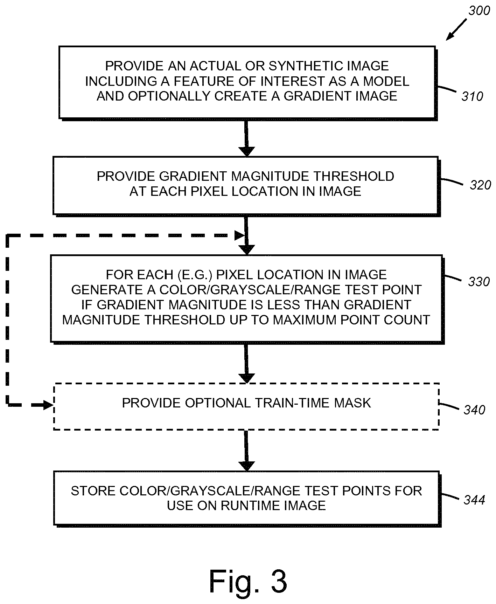

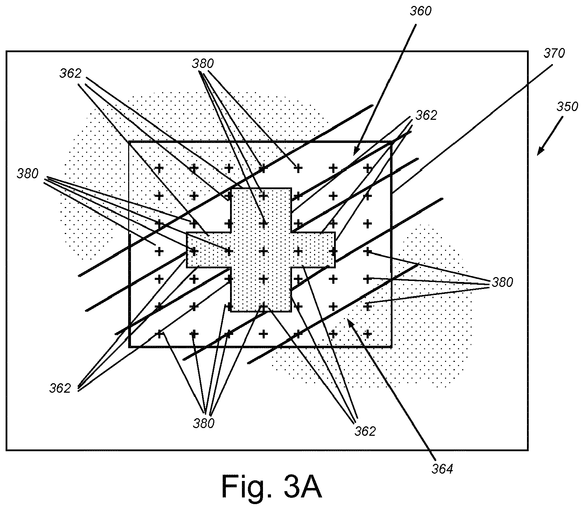

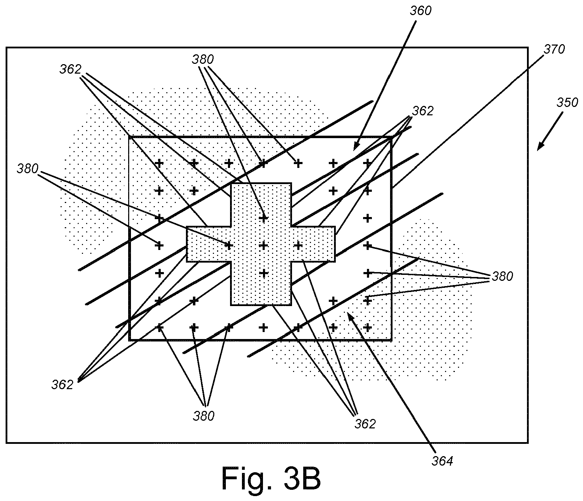

Reference is now made to Fig. 3, which shows a procedure 300 for establishing a training model that is used in a subsequent runtime color/grayscale/range determination procedure described below. An actual or synthetic training image is provided to the system in step 310. The training image is arranged as a two-dimensional (2D) array of pixels, each having coordinates (x and y) and associated intensity value(s) (for example, where multiple colors/color intensities exist). Alternatively, another value, such as height in a height map can describe the pixel at given coordinates. Additionally, the training image can include at least one feature of interest-for example printing and/or graphics that defines contrasting edges and predetermined shapes. The image can be acquired from a physical model by the camera assembly (or another camera arrangement), or can be synthetically produced using predefined shapes for features of interest generated by and inserted into the training image by a user-for example a predefined circle, square, letter, etc. of a given size/scale. Alternatively, the training image can be a data set that contains various edge and clutter values in a manner free of an actual 2D image-for example a matrix of intensity and/or gradient values that reference locations in a region of interest.

As further described in step 310, an optional gradient image can be created. This can be used in subsequent steps as described generally herein. A gradient image is generated by measuring the change between (e.g. intensity level) adjacent pixel values and defining the degree of change as a gradient value at each discrete pixel location in the image.

In step 320, the procedure 300 provides a gradient magnitude threshold value for each pixel location of the training image. This threshold can be provided as a user-input (e.g. via a user interface) or system-provided parameter (e.g. a stored value). The gradient magnitude threshold can be computed in the alternative using an appropriate algorithm that determines the relative values (ranges of values, etc.) of the image data and employs these values in the algorithm to compute the threshold as described generally below.

In step 330, the procedure 300 generates color/grayscale/range test points in association with each specified location in the training image. These locations can be based upon pixel locations or can be associated with sub-pixel locations, or can generally be established with any acceptable coordinate space relative to the training image. Each of the color/grayscale/range test points are established at respective locations that have a gradient magnitude less than the gradient magnitude threshold provided in step 320. In other words, test points (also sometimes termed "probes") can be applied to weak edges in an image where the measured/analyzed values for gradient magnitude (or another indicia of image features/characteristics) is below a given threshold. As a general consequence of choosing test points at locations of low gradient, they are applied so that they probe areas of the target image that are remote from edges (i.e. high gradient), and other areas of high gradient. In general the test points reside in locations of the training image/pattern in which the gradient approaches or equals zero (i.e. stable regions of the image). It is noted that various embodiments can omit the use of an input threshold value in favor of default value that is set to a low gradient level. In other embodiments, in which an actual threshold value is input, this value can be set (typically) to a low number at which test points are generally omitted from regions of the image with anything above a nearly zero-value gradient.

In general, the above described value for gradient magnitude threshold can be computed similarly to a noise threshold in vision system processes using (e.g.) a histogram. Note that a gradient image can be generated or provided in step 310. In step 310 the gradient image can be computed directly from the intensity/greyscale/range image or alternatively for color images, the gradient image can be computed directly from the color image. For each pixel in the gradient image with a magnitude of less than gradient magnitude threshold, the procedure generates a color/grayscale/range test point. As such, the system considers (for later runtime analysis) locations on the training image/pattern that *should* have a low gradient magnitude at runtime, and are thus potential locations to provide a test point. These established test points on the training pattern become the locations at which color, grayscale or range information are compared (training versus runtime).

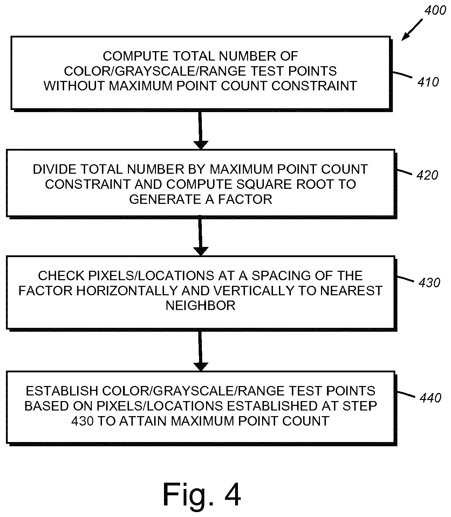

With reference to step 330 in Fig. 3 and Fig 4, the generation of color/grayscale/range test points can be capped (according to sub-procedure 400) to a maximum color/grayscale/range point count in the image according to a set value of MaxColor/Grayscale/RangePixels. By way of non-limiting example, a default value of 10,000 can be employed. As such, the total number of color/grayscale/range test points that should be generated without this cap (i.e. Color/Grayscale/RangePixelCount in step 410) is divided by the value of MaxColor/Grayscale/RangePixels in step 420. Illustratively, the square root of this value is computed. For example, where 20,000 total test points should be generated and 10,000 is the maximum, then the resulting factor n becomes (10,000/20,000)^{1/2}, or 1.414. Thus, in step 430, the procedure 400 can check every 1.414'th pixel (or other location in the coordinate space, e.g. subpixel) both horizontally and vertically (rounded off, nearest neighbor), and the procedure (step 430 in Fig. 4) test only those pixels/locations that have gradient magnitude values below the gradient magnitude threshold-which becomes the associated color/grayscale/or range value at runtime if unexpected data is present in that location in the runtime image). This procedure 400 samples 1/nth of the overall image data. The resulting sample is an approximation of the value MaxColor/Grayscale/RangePixels. It should be clear that a variety of other techniques can be employed to cap the number of color/grayscale/range test points in an image. Some techniques can involve omitting certain regions from the image or weighting counts in certain areas due to expected features or lack thereof. The procedure 400 then establishes the locations of test points in the training image in step 440 based upon the pixels/locations provided in step 430. These are stored in for subsequent use (i.e. at runtime) in accordance with step 344 of procedure 300 (Fig. 3).

Note that step 340 (shown in phantom) provides an optional train-time mask. This step can occur before or after step 330, or at another appropriate time within the overall procedure 300. The placement of the predetermined number (e.g. 10,000) of test points in the training image can be further limited or filtered to locations marked as relevant to the feature of interest. For example, a "care" flag can be placed on relevant points. Other points outside this region can be flagged as "don't care" and omitted from the process. For example, in an image with a red button among other elements, a user can specify, by way of a mask image that matches the training image, that only the red button should be considered for (e.g.) color matching. This approach can be used for masking based upon predetermined grayscale and/or range/distance values as well.

Note also, as an alternative to the creation and use of a gradient image in step 310, the procedure can employ traditional processes/techniques to generate an edge image (for example, using a Sobel operator or another similar form of image filter). After locating edges in the image, the procedure applies test points to locations that are generally free of edge features. Thus, the term "gradient image" herein should be taken broadly to include alternative approaches that locate edges/high contrast regions in the image for placement of test points-wherein such an alternative approach achieves a similar result to the use of a gradient image by locating test points at locations in the image that are remote from edge features. Illustratively, the procedure can be provided with a list of edges (for example as part of a set of synthetic training data) in the image, and test points are thereby located remote from the edges.

By way of non-limiting example, and as a further illustration, reference is made Fig. 3A, which shows all or a portion of an FOV 350 that contains a training feature set 360. In this case the features set 360 (edges 362) defines a crossing pattern similar to the discrete, exemplary patterns 172 and 174 in Fig. 1. A bounding box 370 (or other delineation) is located about the region containing the features 360. The edges 362 are part of an object that also contains at least one other distinguishing characteristic-at least one of color, grayscale shade and height/range with respect to the surrounding background 364 in the bounded region 370. The bounding box can be placed automatically or by a user-specified procedure so as to fully enclose the features of interest, but avoid regions that are clearly outside the desired area in which analysis should occur. In this example, a geometric grid of test points 380 is established generally across the bounded region 370. As shown, these points fall within differing regions of color, grayscale level or range/height. The *granularity* of the point distribution across the image or regions of interest is highly variable as is the arrangement of the grid. In this case test points are evenly spaced in the vertical and horizontal direction. Test points can also be arranged in an array that more closely matches the general outline of the edges. Likewise, while an orthogonal grid is employed, the array can be arranged (e.g.) in a polar coordinate grid. The image of Fig. 3A, depicts the array of test points 380 across the entire image without regard to gradient magnitude (edges), which makes it difficult to distinguish the differing regions of color/range/intensity within and outside the edges 362. However, as shown further in Fig. 3B, the procedure 300 particularly modifies the training or runtime image of Fig. 3A so that test points 380 near high-gradient-magnitude areas (edges 362) are omitted. The remaining test points in this version of the image are either clearly within the edges 362 or in the background region 370. Thus, the actual placement of test points on the image is typically in accordance with the depicted example of Fig. 3B. In this example, the placement of test points clearly within each region allows the procedure to effectively delineate distinct regions of color/grayscale/intensity.

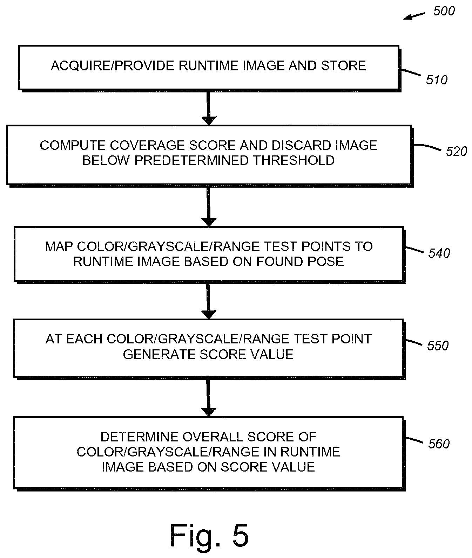

Fig. 5 shows a runtime procedure 500 in which an acquired image (a candidate image) is to be scored for determination of the degree of matching color, grayscale level or range relative to the trained model. The image is acquired by the camera assembly 120 (Fig. 1), and stored, or otherwise provided to the system, for runtime analysis at step 510. In step 520, the procedure 500 computes the candidate pose and coverage (raw) score for the image and optionally the clutter score as well. If raw score is below the "accept" threshold, then the candidate runtime image is discarded and the next candidate pose is analyzed-indicating a "reject" status. The computation of coverage and generation of regular image "probes" and other mechanisms for aligning/scoring of images in runtime can be accomplished using commercially available pattern matching tools and processes described further below (e.g. Cognex PatMax®, PatMax RedLine®, etc.). Additionally, a runtime mask can be used to avoid scoring any region of the runtime candidate image that has been masked out at runtime as not relevant to the color/grayscale/range matching procedure. Note that at least a basic (e.g. coarse) registration process is used at an appropriate time within the overall process to align the coordinate space of the runtime image with the coordinate space of the training pattern.

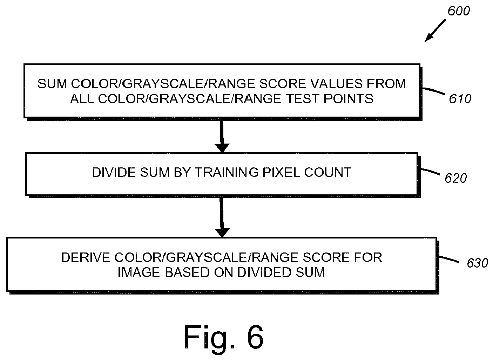

In step 540, the found "pose" of the runtime image is used to map the color/grayscale/range test points to the coordinate space of the runtime image. For each point, the procedure 500 scores it at step 550. The score at step 550 at a mapped point is the either the difference between the color/greyscale/range image and the color/greyscale/range image in the training pattern at that mapped point or the product of the mean-subtracted color/greyscale/range image and the mean-subtracted color/greyscale/range image in the training pattern at the mapped point. Alternatively, the score can be the absolute value or square of this value or a mathematical function of this value. This result can be (by way of non-limiting example) multiplied by an appropriate factor to rescale the score space to be normalized (i.e. between 0 and 1). Note that other normalization techniques (or no normalization) can be employed in alternate embodiments. By way of non-limiting example of a runtime procedure (which can be widely varied in alternate embodiments), the computed score information is used by the procedure 500 to provide an overall score for the match between the runtime pose and training model in accordance with step 560. In an exemplary embodiment, and with further reference to Fig. 6, the procedure 600 sums all the color/grayscale/range match score values from all of the mapped color/grayscale/range test points in step 610. This resulting sum is then divided by the value in step 620 of the total number of pixels/locations (that meet the gradient magnitude threshold limit-termed TrainingPixelCount) in step 620, thereby deriving the overall color/grayscale/range match score (Color/Grayscale/RangeScore) for the image in step 630. By dividing by the value TrainingPixelCount instead of dividing the value Color/Grayscale/RangePixelCount to obtain the resulting rough average value, an assumption is made that a coverage value of 1 would provide as many matching color/grayscale/range pixels/locations in the image as there are potential "correct" pixels/locations. The final reported score is (CoverageScore - Color/Grayscale/RangeFactor * Color/Grayscale/RangeScore - ClutterScore), clamped at 0, where Color/Grayscale/RangeFactor defaults to 0.5.

Note that the color/grayscale/range match score or other information on the level of color/grayscale/range behavior in the runtime candidate pose can be utilized by downstream (optional) processes and tasks to perform various actions, such as (but not limited to) stopping a production line, sounding alerts, storing quality control data, and/or rejecting parts. By way of example, if the aligned pose exhibits a close match to the training image in terms of color, grayscale level and/or height, then the underlying runtime object is accepted. If there is a mismatch between the runtime pose's color/grayscale/range test points and the training model's corresponding points, the alignment fails (even if the available edge features appear aligned), and the object can be rejected.

Illustratively, in the above-incorporated determination system and method, after a candidate pattern match is found, color/grayscale/range test points are mapped into the runtime image and then each test point's color/grayscale/range information can be matched to the color present in the runtime image at the mapped location (using any metric(s) we choose, e.g. Euclidean distance in RGB space). In various embodiments, an aggregate color/grayscale/range score can then be computed and reported to the user, and this score is used to optionally inform the overall pattern score, e.g. by adding the pattern score and color match score, or by subtracting the percentage of color/grayscale/range test points that are outside a distance threshold

It should be clear that the generation of a color/grayscale/range test point training pattern allows for rapid and reliable detection of non-matching features on a runtime candidate image in regions remote from high-gradient-level edges, in portions of the image that are more stabile. This approach can enable acceptance or rejection of runtime candidate poses before more in-depth and processor/time-intensive analysis is undertaken, thereby increasing operational efficiency and throughput speed.

The foregoing has been a detailed description of illustrative embodiments of the invention. Various modifications and additions can be made without departing from the spirit and scope of this invention. Features of each of the various embodiments described above may be combined with features of other described embodiments as appropriate in order to provide a multiplicity of feature combinations in associated new embodiments. Furthermore, while the foregoing describes a number of separate embodiments of the apparatus and method of the present invention, what has been described herein is merely illustrative of the application of the principles of the present invention. For example, the use of the terms "test point" and/or "probe" should be taken broadly to include other types of geometric structures in an image coordinate space-such as polygons with vertices in which an average color, grayscale level and/or range/height is computed within the polygon. It is also contemplated that a mask can be employed at runtime so that the alignment process omits regions that are outside the borders of the mask. This expedites alignment by removing extraneous features or those that are not of interest. In general, regions of the image can be masked out from location of color/grayscale/range test points if they are considered unimportant to the analysis of the image. Also, as used herein various directional and orientational terms (and grammatical variations thereof) such as "vertical", "horizontal", "up", "down", "bottom", "top", "side", "front", "rear", "left", "right", "forward", "rearward", and the like, are used only as relative conventions and not as absolute orientations with respect to a fixed coordinate system, such as the acting direction of gravity. Moreover, a depicted process or processor can be combined with other processes and/or processors or divided into various sub-processes or processors. Such sub-processes and/or sub-processors can be variously combined according to embodiments herein. Likewise, it is expressly contemplated that any function, process and/or processor herein can be implemented using electronic hardware, software consisting of a non-transitory computer-readable medium of program instructions, or a combination of hardware and software. Accordingly, this description is meant to be taken only by way of example, and not to otherwise limit the scope of this invention.

## Claims

1. A method for scoring a candidate pose of a trained color pattern against a color image with a vision system having a camera assembly and a vision system processor, comprising the steps of:
providing, to the vision system processor, a trained color pattern with a set of color test points that represent color match information in the trained pattern, the color test points residing at least in regions of low gradient relative to an intensity image representation of the color image;
providing, to the vision system processor, a runtime color image of a scene;
establishing, with the vision system processor, a runtime pose with a coordinate space for the runtime color image with respect to the trained pattern where the runtime pose is generated by a geometric alignment process;
mapping, with the vision system processor, the color test points on the coordinate space for the image;
determining, with the vision system processor, the color match respectively at the mapped color test points; and
based on the color match, determining a color match score in at least a portion of the runtime color image.

2. The method as set forth in claim 1 wherein the step of determining the color match comprises determining a value for the color in a predetermined color space of the trained color pattern to the runtime color image at the mapped color test points.

3. The method as set forth in claim 1 or 2 wherein the step of establishing the pose comprises at least one of (a) employing alignment tools in the vision system to automatically align the runtime image to the trained color pattern and (b) obtaining information indicating the pose from a user input.

4. The method as set forth in any preceding claim, further comprising a mask that is applied to the runtime color image, wherein the mask indicates which areas of the runtime color image are evaluated for color match.

5. The method as set forth in any preceding claim, further comprising generating an intensity image from at least one of the trained color pattern and the runtime color image for use by the geometric alignment process.

6. The method as set forth in any preceding claim, wherein the color test points reside in regions of low gradient based upon a gradient magnitude threshold, and wherein the gradient magnitude threshold is established by at least one of (a) a user-input parameter and (b) a system-generated parameter.

7. A method for scoring a candidate pose of a trained grayscale pattern against a grayscale image with a vision system having a camera assembly and a vision system processor, comprising the steps of:
providing, to the vision system processor, a trained grayscale pattern with a set of grayscale test points that represent grayscale level match information in the trained pattern, the grayscale test points residing at least in regions of low gradient relative to an intensity image representation of the grayscale image;
providing, to the vision system processor, a runtime grayscale image of a scene;
establishing, with the vision system processor, a runtime pose with a coordinate space for the runtime grayscale image with respect to the trained pattern where the runtime pose is generated by a geometric alignment process;
mapping, with the vision system processor, the grayscale test points on the coordinate space for the image;
determining, with the vision system processor, the grayscale level match respectively at the mapped grayscale test points; and
based on the grayscale level match, determining a grayscale level match score in at least a portion of the runtime image.

8. The method as set forth in claim 7, wherein at least one of:
the step of establishing the pose comprises at least one of (a) employing alignment tools in the vision system to automatically align the runtime grayscale image to the trained grayscale pattern and (b) obtaining information indicating the pose from a user input;
the method further comprising a mask that is applied to the runtime greyscale image, wherein the mask indicates which areas of the runtime grayscale image are evaluated for grayscale level match; and
the grayscale test points reside in regions of low gradient based upon a gradient magnitude threshold, and wherein the gradient magnitude threshold is established by at least one of (a) a user-input parameter and (b) a system-generated parameter.

9. A method for scoring a candidate pose of a trained range image pattern against a range image with a vision system having a camera assembly and a vision system processor, comprising the steps of:
providing, to the vision system processor, a trained range image pattern with a set of range test points that represent range match information in the trained pattern, the range test points residing at least in regions of low gradient relative to an intensity image representation of the range image;
providing, to the vision system processor, a runtime range image of a scene;
establishing, with the vision system processor, a runtime pose with a coordinate space for the runtime range image with respect to the trained pattern where the runtime pose is generated by a geometric alignment process;
mapping, with the vision system processor, the range test points on the coordinate space for the image;
determining, with the vision system processor, the range match respectively at the mapped range test points; and
based on the range match, determining a range match score in at least a portion of the runtime image.

10. The method as set forth in claim 9 wherein at least one of:
the step of establishing the pose comprises at least one of (a) employing alignment tools in the vision system to automatically align the runtime range image to the trained range image pattern and (b) obtaining information indicating the pose from a user input;
the method further comprising a mask that is applied to the runtime range image, wherein the mask indicates which areas of the runtime range image are evaluated for range match;
the range test points reside in regions of low gradient based upon a gradient magnitude threshold, and wherein the gradient magnitude threshold is established by at least one of (a) a user-input parameter and (b) a system-generated parameter; and
the method further comprising generating an intensity image based upon at least one of the trained range image pattern and the runtime range image for use with the geometric alignment process.

11. A system for training a pattern with a vision system comprising:
a camera assembly and a vision system processor operatively connected to the camera assembly; and
a training module that receives training image data, identifies regions of low gradient magnitude and applies test points in the regions with respect to the image data based upon at least one of color, grayscale intensity and range up to a maximum test point count.

12. The system as set forth in claim 11 wherein the vision system processor includes a runtime alignment module arranged to (a) acquire runtime image data of a scene and (b) establish a runtime pose with a coordinate space for the runtime image data with respect to the trained pattern, where the runtime pose is generated by a geometric alignment process and (c) the color test points on the coordinate space for the runtime image data.

13. The system as set forth in claim 12 wherein the vision system processor includes a matching process that is arranged to (a) determine at least one of a color, grayscale intensity and range match between the trained pattern and the runtime image data and (b) determine a match score in at least a portion of the runtime image data.

14. The system as set forth in claim 13 further comprising an intensity image based upon at least one of the trained range image pattern and the runtime image data for use with the geometric alignment process.

15. The system as set forth in claim 13 wherein at least one of:
the pose is established based upon at least one of (a) alignment tools in the vision system that automatically align the runtime image to the trained pattern and (b) information indicating the pose from a user input; and
the method further comprising a mask that is applied to the runtime image, wherein the mask indicates which areas of the runtime image are evaluated for matching.
